# EUROPEAN PATENT APPLICATION

(11) **EP 3 542 620 A1**
(43) Date of publication of application: **25.09.2019**
(21) Application number: 18163719.0
(22) Date of filing: 23.03.2018
(51) Int. Cl.: A01K 1/12, A01K 1/03

(54) **CART FOR STORING AND TRANSPORTING A PET AND ARTICLES**

(71) Applicant: Jørgen Kruuse A/S, 5550 Langeskov (DK)
(72) Inventor: Pedersen, Henrik, 5550 Langeskov (DK); Lohmann, Sussi, 5550 Langeskov (DK); Lassen, Martin, 5550 Langeskov (DK); Lotus, Frej, 2300 København S (DK); Ahm, Isabel, 2100 København Ø (DK)
(74) Representative: Plougmann Vingtoft a/s

(57) **Abstract**

The present invention relates to a cart (1) for storing and transporting a pet and articles. The cart comprises a pet storage space (2) defined by a lower basis plate (3) forming a floor for carrying the pet, a top plate (4), and four sidewalls being in an upright position when a pet is stored in the pet storage space. The cart has wheels (6) arranged to allow for transportation of the cart. One of the sidewalls comprises at least one grating (8) which is pivotally mounted so that it can be pivoted between a first position in which it extends outwards from the pet storage space and a second position in which it extends into the pet storage space. An opposite sidewall (11) is pivotally mounted so that it can be pivoted between an upright orientation and a horizontal position in which it extends into the pet storage space. The at least one grating and the second sidewall has a releasable locking mechanism (12) by which it can be retained in the upright position to form a cage for the pet. Arranging one or two of the sidewalls in the second or horizontal position, respectively, a cart with two table surfaces are arranged on which articles can easily be transported.

## Description

### FIELD OF THE INVENTION

The present invention relates to a cart for storing and transporting a pet and articles, and in particular a cart with more functionality than a traditional wheeled cage.

### BACKGROUND OF THE INVENTION

At veterinary hospitals or similar animal practises, it is often convenient to temporarily house the pets in wheeled cages for easy transportation and for allowing surveillance of the pets e.g. after surgeries; such wheeled cages are referred to as carts in the following. Known carts are optimised for this purpose and typically have one of the sides in the form of an openable or removable grating whereas the other sides form a closed box except for the side having grating. This makes them unsuitable or inconvenient to use for other purposes, such as for transportation of articles.

Hence, an improved cart would be advantageous, and in particular a cart with more flexibility with respect to different uses of the cart would be advantageous.

### OBJECT OF THE INVENTION

It is an object of the present invention to provide a cart for storing and transporting a pet which cart is more suitable for storing and transporting articles than similar known carts.

It is an object of at least some embodiments of the present invention to provide a cart which is easier to handle than similar known carts.

It is another object of at least some embodiments of the present invention to provide a cart with which it is possible to provide access to the pet storage space by use of one hand only.

It is a further object of the present invention to provide an alternative to the prior art.

In particular, it may be seen as an object of the present invention to provide a cart that solves the above-mentioned problems of the prior art.

### SUMMARY OF THE INVENTION

Thus, the above-described object and several other objects are intended to be obtained in a first aspect of the invention by providing a cart for storing and transporting a pet and articles, the cart comprising:
- a pet storage space defined by:
   - a lower basis plate forming a floor for carrying the pet,
   - a top plate with a lower surface and an upper surface, the lower surface forming a ceiling of the pet storage space and the upper surface forming a table,
   - four sidewalls being in an upright position when a pet is stored in the pet storage space, and
- at least three wheels arranged to allow for transportation of the cart,
wherein:
- a first one of the sidewalls comprises at least one grating which is pivotally mounted so that it can be pivoted between a first position in which it extends outwards from the pet storage space and a second position in which it extends into the pet storage space along an adjacent sidewall, the basis plate or the top plate, and
- a second one of the sidewalls being the sidewall opposite the first sidewall, the second sidewall being pivotally mounted so that it can be pivoted between an upright orientation and a horizontal position in which it extends into the pet storage space, and
- each of the at least one grating and the second sidewall has a releasable locking mechanism by which the respective grating or second sidewall can be retained in the upright position.

In addition to the above-mentioned uses for storage and transportation, the table formed by the upper surface of the top plate can be used as a working table, such as for examining a pet or for preparing for an examination. It may also be used for temporarily placing of instruments during a surgery.

The cart may comprise a frame to which the sidewalls, the basis plate, and the top plate are mounted. The sidewalls or the basis and top plates may also be directly connected to a neighbouring sidewall. The cart may be provided with a push handle for ease of manually transporting the cart; this will be illustrated on the figures.

By "upright" is preferably meant that the sidewalls extend in a substantially vertical orientation between the basis plate and the top plate. However, the scope of protection also covers having the sidewalls arranged at other orientations, such as inclined 5 to 10° with respect to vertical. The basis plate and the top plate are typically horizontally arranged. However, they may also be arranged at a small angle, such as 3 to 8° with respect to horizontal, so that possible liquid spilled thereon will run off due to gravity.

When the at least one grating is pivoted to the first position, i.e. extending outwards from the pet storage space, the pet can easily be moved into and out of the pet storage space.

When the at least one grating is pivoted to the second position and/or the second sidewall is pivoted to the horizontal position, the cart obtains an opening at one or both of the respective sides, the opening providing easy and uncovered access to the pet storage space. Hereby the cart can be used e.g. for transporting articles both on the table formed by the top plate and on a lower level being either the floor or an upwardly facing surface of the second sidewall; this will be shown in the figures.

In some embodiments of the invention, the first sidewall comprises two gratings each of which is pivotal around a vertical axis along or near an edge of the grating and fastenable to an adjacent one of two opposite sidewalls. Hereby the cart can easily be used for transporting articles on the floor of the pet storage space without any risk of interference with the gratings. If the second sidewall is kept in the upright position, the cart may in this configuration be used for storing articles shielded from the surroundings by arranging the cart with the open side facing towards a wall of a room in which the cart is placed.

In presently preferred embodiments, the second sidewall is pivotal around a horizontal axis, and the horizontal position is along the lower basis plate. Hereby the surface of the second sidewall forms a surface which can be used for storing or transporting articles. In some embodiments of the invention, the cart has one grating which is pivotal around a horizontal axis so that the second position of the grating is along and on top of the lower basis plate. In such an embodiment, the second sidewall may be mounted to have the horizontal orientation being at a level in which the second sidewall can be arranged on top of the grating so that a plane surface is obtained.

The second sidewall may be pivotal to a third position in which it extends outwards from the pet storage space and slopes downwards to form a ramp along which the pet can walk into or out of the pet storage space.

The sidewalls may be shaped and dimensioned so that the at least one grating and the second sidewall can all be in their second or horizontal position at the same time. Hereby a cart is obtained which is open at both opposite sides resulting in a two-level table cart suitable for transportation of articles at the lower level which articles may need access from both sides.

In any of the embodiments as described above, the following may apply:
- each of the releasable locking mechanisms comprises two spring-loaded rods extending along a common axis and in opposite directions from a handle,
- the two rods are biased away from the handle and adapted to engage with associated holding means of the cart to retain the respective sidewall in the upright position thus forming a cage for the pet,
- the handle comprises two handle parts each connected to one of the rods, and
- manual activation of the handle parts moves the two rods towards each other to release them from the holding means.

Such locking mechanisms can facilitate handling, since they can be activated with one hand. The other hand can then be used e.g. for handling of the pet or for holding onto the cart.

The at least one grating may be provided with at least one magnet with which it can be temporarily retained in the second position via contact with a magnetic material arranged on or being a part of the sidewall along which the at least one grating extends. This is an easy means of fastening and release provided that an appropriate strength of the magnet is chosen.

A cart as described above may further comprise one or more of the following accessories each provided with magnets which can be used for fastening to magnetic regions of the cart: mattress, hook, tray, or box. Examples of such accessories will be shown in the figures.

### BRIEF DESCRIPTION OF THE FIGURES

The cart according to the invention will now be described in more detail with regard to the accompanying figures. The figures show one way of implementing the present invention and is not to be construed as being limiting to other possible embodiments falling within the scope of the attached claim set.
Figure 1 shows an embodiment of a cart according to present invention.
Figure 2 shows the cart in figure 1 with the gratings in the first position in which they extend outwards from the pet storage space.
Figure 3 shows the cart in figure 1 with the gratings in the second position in which they extend into the pet storage space.
Figure 4 shows the cart in figure 1 with the gratings in the second position and the second sidewall in the horizontal position.
Figure 5 shows a partial view of the locking mechanisms of the gratings of the cart in figure 1.
Figure 6 shows a partial view of the cart in figure 1 showing the holding means of the cart used to engage with the rods of the locking mechanisms in order to retain the second sidewall in the upright position.
Figure 7 shows an embodiment of a cart according to the present invention in with the second sidewall in a third position to form a ramp.
Figure 8 shows an embodiment of a cart according to the present invention and comprising a mattress. Figure 8.a shows a partial view of the cart with the mattress arranged on the floor, figure 8.b shows a partial view of the cart with the mattress arranged under the ceiling of the pet storage space, and figure 8.c shows the mattress arranged on the table.
Figure 9 shows examples of types of accessories which may be fastened to a cart according to the invention by use of magnets. Figures 9.a and 9.b show a box, and figures 9.c and 9.d show a hook.
Figure 10.a shows an example of an accessory in the form of a stand for infusion bags which can be fastened to the cart by means of a holder shown in figure 10.b.

### DETAILED DESCRIPTION OF AN EMBODIMENT

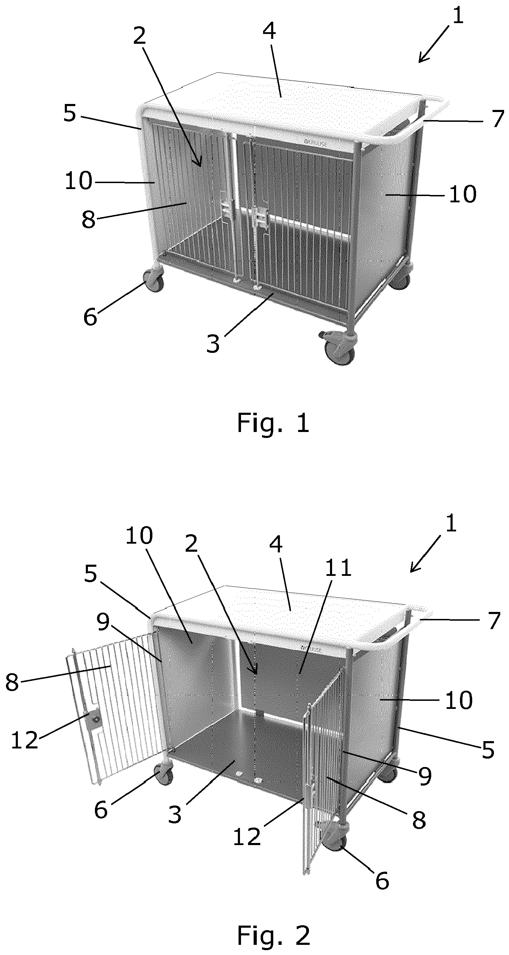

Figure 1 shows an embodiment of a cart 1 which can be used both for storing and transporting of a pet (not shown) and alternatively or at the same time for storing and transporting articles. The cart 1 comprises a pet storage space 2 which is intended for temporarily storing a pet at the practise of a vet. The cart 1 may be used to house a pet e.g. between two investigations, when waiting for a surgery, or during supervision after a surgery. The pet storage space 2 is defined by:
- a lower basis plate 3 forming a floor for carrying the pet,
- a top plate 4 with a lower surface and an upper surface, the lower surface forming a ceiling of the pet storage space 2 and the upper surface forming a table,
- four sidewalls being in an upright position when a pet is stored in the pet storage space 2.

In this way, the pet storage space 2 is in the form of a cage for keeping the pet under safe conditions. At the same time, the table can be used for storing or transporting articles. It can also be used for a working table.

In the illustrated embodiment, the cart 1 comprises a frame 5 to which the sidewalls, the basis plate 3, and the top plate 4 are mounted. The sidewalls or the basis and top plates 3,4 may also be directly connected to a neighbouring sidewall. The illustrated cart 1 has four wheels 6 (only three of them are visible in the figure) arranged at the lower corners of the cart 1 to allow for transportation of the cart 1. However, the invention also covers carts having other numbers of at least three wheels. The cart 1 is intended for manual movement and is therefore provided with a handle 7 for ease of manoeuvring.

A first one of the sidewalls comprises grating 8 which grating 8 in the embodiment of figure 1 is in the form of two gates as more clearly seen in figure 2. In other embodiments (not shown), there is only one grating. In figure 1, the gratings are shown in the upright position forming a cage in the form of the pet storage space.

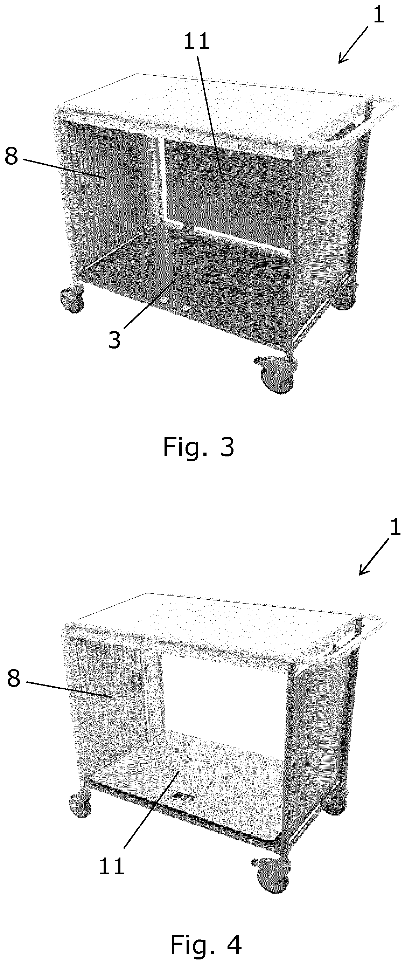

The gratings 8 are pivotally mounted so that they can be pivoted between a first position in which they extend outwards from the pet storage space 2, as shown in figure 2, and a second position in which they extend into the pet storage space 2 along an adjacent sidewall, as shown in figure 3. Thus, the cart 1 according to the illustrated embodiment has two gratings 8 each of which are pivotal around a vertical axis along or near an edge 9 of the grating 8 and fastenable to an adjacent one of two opposite sidewalls 10. The gratings 8 may be provided with at least one magnet (not shown) with which they can be temporarily retained in the second position via contact with a magnetic material arranged on or being a part of the sidewall 10 along which the at least one grating 8 extends. The opposite sidewalls 10 are typically fixedly mounted.

In alternative embodiments (not shown) having only one grating, the grating may be pivotal around a horizontal axis, and the second position is either along the upper surface of the basis plate, i.e. the floor, or along the lower surface of the top plate, i.e. the ceiling.

The second sidewall 11 opposite the first sidewall, i.e. the gratings 8, is pivotally mounted so that it can be pivoted between an upright orientation, shown in figure 1, and a horizontal position in which it extends into the pet storage space 2 as shown in figure 4. In the embodiment in figure 4, the second sidewall 11 is pivotal around a horizontal axis along the lower basis plate 3. Hereby the second sidewall 11 can be arranged at the lower part of the cart 1 and form a shelf. Such a shelf can be used for storage or transportation of articles (not shown). In the embodiment shown in figure 4, the sidewalls are shaped and dimensioned so that the at least one grating 8 and the second sidewall 11 can all be in their second or horizontal position at the same time. Hereby a cart 1 is obtained which can be used both for storage and transportation of a pet as well as for other articles. In such an embodiment there is easy access to the lower shelf formed by the horizontally arranged second sidewall.

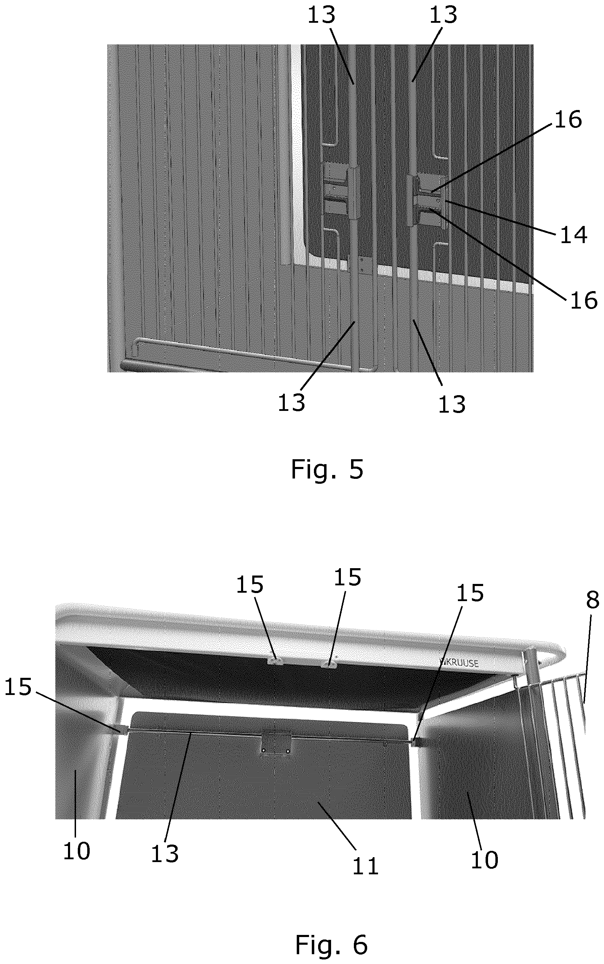

In the cart 1 shown in figures 1 to 4, each of the gratings 8 and the second sidewall 11 has a releasable locking mechanism 12 by which the respective grating 8 or sidewall 11 can be retained in the upright position. As shown in more details in figure 5, each of the releasable locking mechanisms 12 of the illustrated embodiment of the invention comprises two spring-loaded rods 13 extending along a common axis and in opposite directions from a handle 14. The two rods 13 are biased away from the handle 14 and adapted to engage with associated holding means 15 of the cart 1 to retain the respective sidewall in the upright position thus forming a cage for the pet. The holding means 15 may be in the form of holes into which the respective rods 13 can extend for retaining the sidewall in a desired position, or it may be surfaces against which the ends of the rods are pressed by the spring forces; see figure 6. Such surfaces may also be magnetic to increase the engagement force with magnetic rods 13. As shown in figure 5, the handle comprises two handle parts 16 each connected to one of the rods 13, and manual activation of the handle parts 16 by moving them towards each other moves the two rods 13 towards each other to release them from the holding means 15.

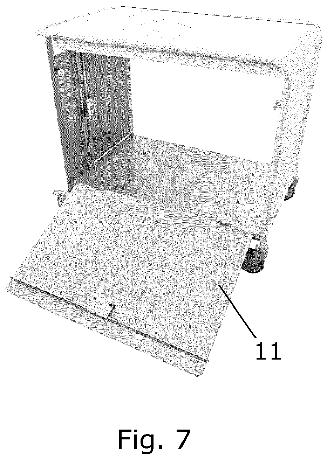

Figure 7 shows the same cart 1 as in the previous figures and having the further feature that the second sidewall 11 is pivotal to a third position in which it extends outwards from the pet storage space 2 and slopes downwards to form a ramp along which the pet can walk into or out of the pet storage space. Hereby it can be easier to get the pet into and out of the cart. If desired, the ramp can also be used to push other articles into the cart.

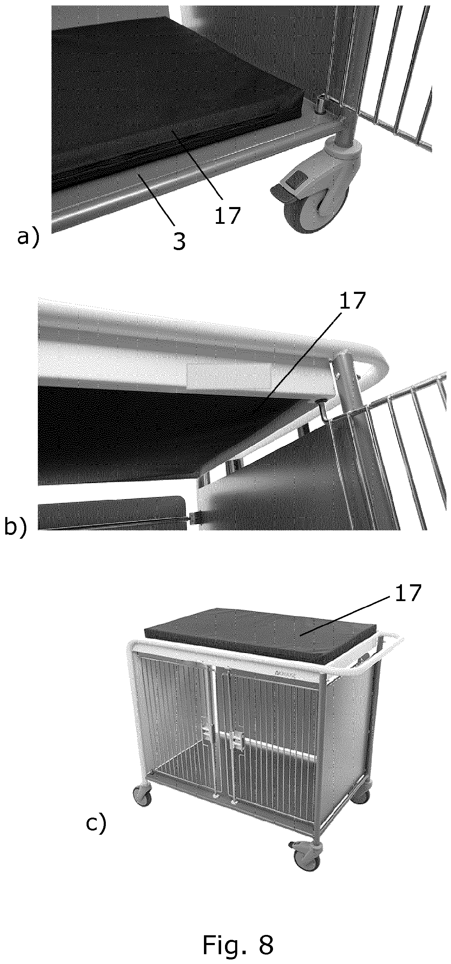

A cart 1 as described above may further comprise one or more of the following accessories each provided with magnets which can be used for fastening to magnetic regions of the cart: mattress, hook, tray, or box. Figure 8 shows an example of such an accessory in the form of a mattress 17. The mattress 17 is shown as placed on the floor of the lower basis plate 3 in figure 8.a, stored under the top plate 4 in figure 8.b, and placed on the table in figure 8.c.

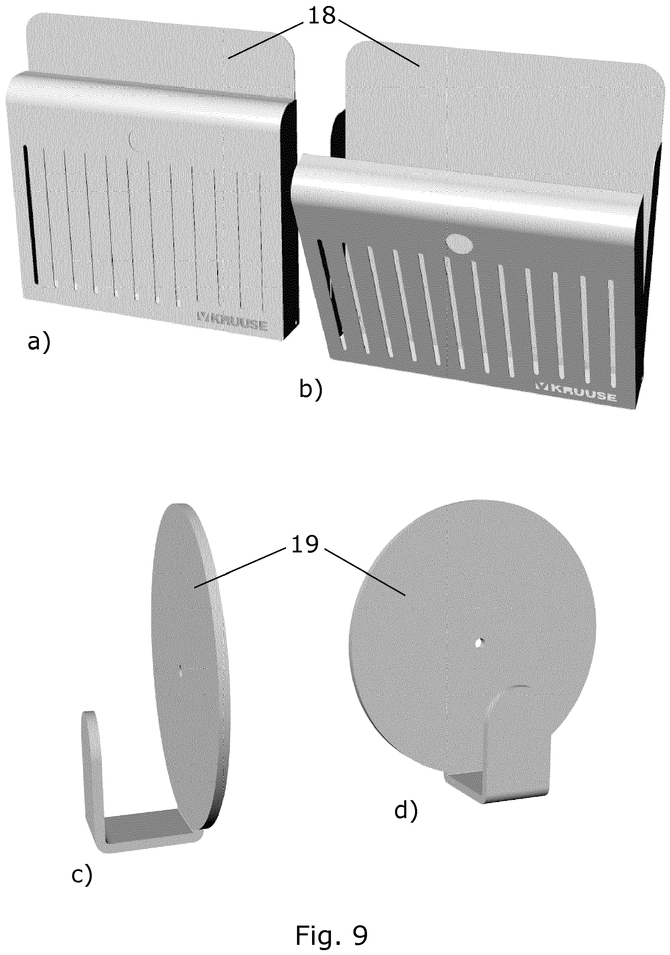

Figure 9 shows examples of other accessories. Figures 9.a and 9.b show a box 18 e.g. for storing information about the pet for easy access by the vet. Figure 9.a shows the box 18 in a closed configuration, and figure 9.b shows the box in a closed configuration. Figures 9.c and 9.d shows a hook 19 in a side view and front view, respectively. The accessories according to this embodiment of the invention may have other designs than those shown.

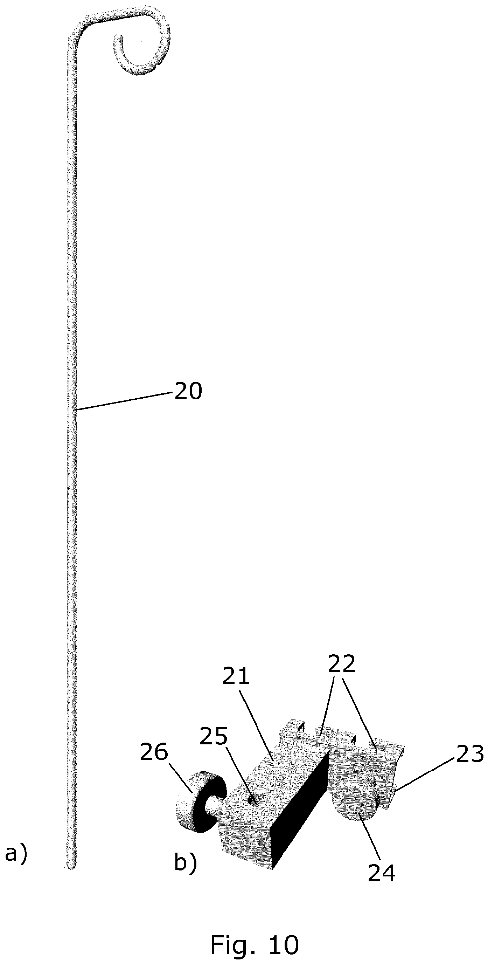

Figure 10 shows another example of an accessory which is fastenable to the cart by other means than magnets. The accessory is a stand 20 for holding e.g. an infusion bag (not shown) which stand 20 can be fastened to the cart 1 by means of a holder 21. The illustrated holder 21 is designed so that it can be fastened either to the rods of the grating 8 of the cart 1 or to a rail (not shown) of e.g. a surgery table. In the illustrated design, fastening to the grating is obtained by the slots 22 and fastening to a rail is obtained by the track 23 in the holder. In both of the illustrated types of fastening, the securing is obtained by tightening a first screw 24. The fact that the holder can be fastened in both ways makes it easy to move the holder between the cart and e.g. a surgery table without removing the infusion bag. The stand 20 is arranged a hole 25 in the holder. It can be arranged at different heights by moving the stand vertically in the hole and tightening a second screw 26.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. In addition, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Cart (1) for storing and transporting a pet and articles, the cart (1) comprising:
- a pet storage space (2) defined by:
- a lower basis plate (3) forming a floor for carrying the pet,
- a top plate (5) with a lower surface and an upper surface, the lower surface forming a ceiling of the pet storage space (2) and the upper surface forming a table,
- four sidewalls (8,10,11) being in an upright position when a pet is stored in the pet storage space (2), and
- at least three wheels (6) arranged to allow for transportation of the cart (1),
wherein:
- a first one of the sidewalls comprises at least one grating (8) which is pivotally mounted so that it can be pivoted between a first position in which it extends outwards from the pet storage space (2) and a second position in which it extends into the pet storage space (2) along an adjacent sidewall (10), the basis plate (3) or the top plate (4), and
- a second one of the sidewalls being the sidewall (11) opposite the first sidewall, the second sidewall (11) being pivotally mounted so that it can be pivoted between an upright orientation and a horizontal position in which it extends into the pet storage space (2), and
- each of the at least one grating (8) and the second sidewall (11) has a releasable locking mechanism (12) by which the respective grating (8) or second sidewall (11) can be retained in the upright position.

2. Cart (1) according to claim 1, wherein the first sidewall comprises two gratings (8) each of which are:
- pivotal around a vertical axis along or near an edge of the grating (8), and
- fastenable to an adjacent one of two opposite sidewalls (10).

3. Cart (1) according to claim 1 or 2, wherein the second sidewall (11) is pivotal around a horizontal axis, and wherein the horizontal position is along the lower basis plate (3).

4. Cart (1) according to claim 3, wherein the second sidewall (11) is pivotal to a third position in which it extends outwards from the pet storage space (2) and slopes downwards to form a ramp along which the pet can walk into or out of the pet storage space (2).

5. Cart (1) according to any of the preceding claims, wherein the sidewalls are shaped and dimensioned so that the at least one grating (8) and the second sidewall (11) can all be in their second or horizontal position at the same time.

6. Cart (1) according to any of the preceding claims, wherein:
- each of the releasable locking mechanisms (12) comprises two spring-loaded rods (13) extending along a common axis and in opposite directions from a handle (14),
- the two rods (13) are biased away from the handle (14) and adapted to engage with associated holding means (15) of the cart to retain the respective sidewall in the upright position thus forming a cage for the pet,
- the handle (14) comprises two handle parts (16) each connected to one of the rods (13), and
- manual activation of the handle parts (16) moves the two rods (13) towards each other to release them from the holding means (15).

7. Cart (1) according to any of the preceding claims, wherein the at least one grating (8) is provided with at least one magnet with which it can be temporarily retained in the second position via contact with a magnetic material arranged on or being a part of the sidewall along which the at least one grating (8) extends.

8. Cart (1) according to any of the preceding claims, further comprising one or more of the following accessories each provided with magnets which can be used for fastening to magnetic regions of the cart: mattress (17), hook (19), tray, or box (18).
